Europäisches Patentamt

European Patent Office

Office européen des brevets

(11) Numéro de publication: **0 153 226**
**A 1**

## (12) DEMANDE DE BREVET EUROPEEN

(21) Numéro de dépôt: 85400215.1

(22) Date de dépôt: 11.02.85

(51) Int. Cl.⁴: **G 11 B 20/10,** G 11 B 7/013, G 11 B 5/09

(30) Priorité: **13.02.84 FR 8402161**

(71) Demandeur: **Nouel, Jean-Marie, 67 rue de Miromesnil, F-75008 Paris (FR)**

(43) Date de publication de la demande: **28.08.85 Bulletin 85/35**

(72) Inventeur: **Nouel, Jean-Marie, 67 rue de Miromesnil, F-75008 Paris (FR)**

(84) Etats contractants désignés: **AT BE CH DE FR GB IT LI LU NL SE**

(74) Mandataire: **Combe, André et al, CABINET BEAU DE LOMENIE 55 rue d'Amsterdam, F-75008 Paris (FR)**

(54) Procédé pour la réalisation d'enregistrements numériques et objets obtenus par ce procédé.

(57) La présente invention concerne un procédé pour la réalisation d'enregistrements numériques, caractérisé en ce que les éléments d'information sont constitués par des petits traits de largeur d'environ 3 à 10 microns et de longueur d'environ 3 à 20 microns qui sont imprimés sur au moins une des surfaces du support d'enregistrement, et les enregistrements obtenus selon ledit procédé.

EP 0 153 226 A1

Procédé pour la réalisation d'enregistrements numériques
et objets obtenus par ce procédé.

La présente invention concerne un procédé pour
la réalisation d'enregistrements numériques et les objets
obtenus par mise en oeuvre dudit procédé.

Les systèmes d'enregistrement numériques se
développent dans de nombreux domaines. C'est notamment
le cas de l'industrie du disque dans laquelle le disque
audionumérique (et la platine à lecture laser qui lui
correspond) connaît un développement très rapide.

Une des difficultés essentielles de ce
système de disque audionumérique à lecture laser réside
notamment dans la réalisation du disque lui-même qui,
comme on le sait, doit comporter une quantité considérable de petites alvéoles de longueurs inégales (entre
0,83 et 3,5 microns) mais de largeur (0,6 micron) et de
profondeur (0,12 micron) constantes. Une autre difficulté
réside dans le guidage de la tête de lecture laser qui
doit être réalisée à moins de 1 micron près.

On rappellera quelques données élémentaires
connues concernant les disques audionumériques de musique actuellement sur le marché :
diamètre du disque 12 cm, durée de l'enregistrement
60 à 75 minutes, vitesse de rotation variable entre
200 et 500 tours/minute, nombre d'informations lues
sur un disque 4,3 millions de bits par seconde.

Il est connu que le nombre de ces informations
est pléthorique, et qu'il pourrait être divisé par 5
ou 10 ou plus sans inconvénients majeurs  pour la qualité
de l'enregistrement. Il est connu par ailleurs qu'un
"disque" dont la durée de passage est trop longue, se
prête mal à la commercialisation d'enregistrements
courts  (3 minutes par exemple).

En partant de ces hypothèses,on peut calculer
que, éventuellement en adaptant la vitesse de rotation
du disque, il est possible de réaliser un disque d'enregistrement de type audionumérique en utilisant des aspérités (creux ou bosses) dont les dimensions sont nettement plus grandes que celles des petites alvéoles actuellement utilisées. Il semble bien que l'on pourrait obtenir des enregistrements audionumériques convenables, d'une durée de quelques minutes, en employant des aspérités dont la largeur (constante) serait de l'ordre de 3 à 10 microns et dont la longueur serait de l'ordre de 3 à 20 microns.

C'est en partant de ces considérations qu'il a été trouvé, et cela constitue la base de la présente invention, que l'on pouvait constituer la surface d'un disque d'enregistrement de type audionumérique en imprimant sur cette surface des petits traits (largeur 3 à 10 microns environ et longueur 3 à 20 microns environ) qui seront équivalents aux petites alvéoles actuellement réalisées et réfléchiront ou arrêteront ou laisseront passer un rayon lumineux ou un rayon laser se déplaçant à une vitesse voulue.

L'intérêt fondamental de l'invention est donc de réaliser ces petits traits par les procédés connus d'impression. (offset par exemple mais de façon non limitative).

Il est apparu qu'en choisissant convenablement le mode d'impression (par exemple l'offset), en choisissant les qualités de la plaque d'impression (plaque lisse très aquaphile comportant une très fine couche métallique d'accrochage par exemple), en choisissant convenablement l'encre (fluidité, couleur) et le support à imprimer, on ne rencontrait aucune impossibilité majeure à réaliser l'impression souhaitée.

L'avantage essentiel du procédé selon l'invention est bien évidemment que les disques sont beaucoup plus faciles à réaliser que les disques actuels et que, par conséquent, les prix de revient sont plus faibles.

Un autre avantage est que l'on peut disposer d'enregistrements relativement brefs, la piste d'enregistrement ayant une largeur constante comprise entre environ 3 et 10 microns.

Un autre avantage provient de ce que la piste sur laquelle les codes sont imprimés est plus large dans les "disques" de la présente invention que dans les disques actuels. Il s'ensuit des facilités pour positionner convenablement la tête de lecture. Un autre avantage est que la lecture du "disque" peut se faire soit par réflexion, soit par transparence ; si en effet le disque est lui-même transparent, les petits tirets opaques qui y sont imprimés serviront à arrêter le rayon de lecture, alors que, si le disque est opaque, l'action des petits tirets sera soit d'absorber le rayon de lecture, soit de diffuser ou diffracter ledit rayon.

Un autre avantage de l'invention est que le procédé d'impression est directement transposable au cas où les enregistrements numériques utilisent des informations (donc des têtes de lecture) de nature magnétique. On sait en effet par impression déposer sur un support convenable des encres et vernis qui, soit inhiberont le signal magnétique contenu dans une couche sous jacente à ladite encre et contenant un oxyde magnétique, soit contiendront eux-mêmes des oxydes magnétiques qui fourniront le signal convenable.

On peut signaler en outre que certains modes de mise en oeuvre ou d'utilisation de l'invention présentent dans certains cas, des avantages notables ;
- par exemple, il est parfaitement possible de mettre en oeuvre l'invention en utilisant des matériaux luminescents ; on peut imprimer sur une surface luminescente ou employer une encre luminescente sur une surface non luminescente,
- par exemple, il est relativement facile de faire en sorte que, contrairement aux disques actuels, la vitesse de lecture soit constante ; cet objectif peut être atteint soit en modulant la longueur des signaux imprimés lorsque l'on se déplace du centre du disque vers la périphérie soit en plaquant le disque souple sur un rouleau cylindrique tournant à vitesse constante, et

- _par exemple, on peut concevoir que l'impression du disque selon l'invention puisse se faire par contact direct d'une plaque off-set sur la surface du disque sans utilisation de "blanchet".

Les exemples non limitatifs suivants illustrent l'invention.

Exemple 1. Utilisation d'un procédé d'impression offset.

On utilise une plaque d'épaisseur 28/100 en acier inoxydable poli lisse. On dépose sur la surface lisse une très fine couche (0,1 micron) de chrome mat (en fait d'un mélange chrome et oxyde de chrome) pui une couche superficielle d'un diazo photosensible encrophile. Cette couche superficielle peut être d'épaisseur très faible : de l'ordre de 0,1 à 0,2 micron. Après insolation avec un laser de façon à insoler de petits bâtonnets de largeur 3 à 5 microns et de longueur 3 à 10 microns (selon un mode et une fréquence fournis par le codeur numérique), la plaque est développée, gommée puis cuite (cuisson de la couche encrophile).

La plaque est mise sur une machine à imprimer convenable (adaptation connue des spécialistes, en vue d'une précision maximale du blanchet, des rouleaux, du mouillage et de l'encre), et on peut

- soit imprimer des feuilles de fer noir très lisse dont la surface est recouverte d'étain fondu
- soit imprimer un support en triacétate de cellulose ou en polyester spécialement traités

- soit imprimer un carton rigide lisse.

Après impression l'encre est séchée avec des ultra-violets et la totalité de la surface est recouverte d'un vernis transparent de protection.

Les petits bâtonnets se présentent sous forme d'une succession de reliefs nettement dessinés; les bâtonnets forment une ligne spiralée; la piste a environ 5 à 6 microns de largeur.

Exemple No. 2. Impression héliogravure.

On utilise un cylindre en cuivre à surface lisse sur laquelle on dépose une couche photosensible de type positif (couche telle que PR12 de la Société PCAS). On insole la couche avec un laser selon une fréquence déterminée. Après développement, morsure et enlèvement de la couche non insolée, le cylindre est chromé. On imprime alors sans difficulté sur un support plastique transparent ou sur un carton rigide.

En variante, on peut également, comme connu, soit creuser des alvéoles à la surface du rouleau de cuivre avec une machine à graver, soit graver un plastique avec un rayon laser et métalliser les alvéoles.

Grâce à ces exemples on est arrivé à produire, par impression, des disques à système d'enregistrement numérique dont la durée d'enregistrement est de 3 à 30 minutes et dont la tonalité est tout à fait comparable à celle des disques analogiques actuellement sur le marché.

Exemple No. 3.

On utilise comme support un disque formé d'un substrat en polyéthylène téréphtalaté (épaisseur 76 microns) revêtu sur une face d'un oxyde magnétique.

On imprime sur la face magnétique une encre formant de petits traits de largeur 10 microns et de longueurs variables entre 5 et 30 microns environ.

En magnétisant les surfaces actives non protégées par l'encre, on dispose d'un disque contenant

0153226

des informations suffisantes pour un enregistrement.

Ce même exemple peut être reproduit avec le même substrat ne comportant pas de couche magnétique ; dans ce cas, on dépose par impression de petits traits constitués d'une encre contenant un oxyde métallique magnétique. Dans ce cas, la magnétisation se produit dans les petits traits déposés.

0153226

## REVENDICATIONS

1.    Procédé pour la réalisation d'enregistrements numériques caractérisé en ce que les éléments d'information sont constitués par des petits traits de largeur d'environ 3 à 10 microns et de longueur d'environ 3 à 20 microns qui sont imprimés sur au moins une des surfaces du support d'enregistrement.

2.    Procédé selon la revendication 1, caractérisé en ce que l'impression est réalisée par un procédé choisi parmi l'offset  sec ou humide et l'héliogravure.

3.    Disques d'enregistrement binaire, caractérisés en ce qu'au moins une de leurs surfaces est composée de petits traits de largeur d'environ 3 à 10 microns.

4.    Disques selon la revendication 3, caractérisés en ce que la piste a une largeur de 3 à 10 microns.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | EP-A-0 060 478 (AGFA-GEVAERT A.G.)<br>* Page 7, ligne 22 - page 8, ligne 32; page 19, lignes 4-23; figure 1 * | 1 | G 11 B 20/10<br>G 11 B 7/013<br>G 11 B 5/09 |
| | --- | | |
| Y | FR-A-2 204 329 (LE GUELVOUIT)<br>* En entier * | 1 | |
| A | | 2,3 | |
| | --- | | |
| A | FR-A-2 458 869 (N.V. PHILIPS GLOEILAMPENFABRIEKEN)<br>* Page 1, lignes 3-9; page 2, lignes 3-7, 19-23; page 7, lignes 21-37; page 8, ligne 31 - page 9, ligne 2; page 12, ligne 35 - page 13, ligne 4; figure 2 * | 1 | |
| | | | DOMAINES TECHNIQUES RECHERCHES (Int. Cl.4) |
| | --- | | |
| A | FR-A-2 345 780 (GOLAY et al.)<br>* Page 4, lignes 10-34; page 5, ligne 36 - page 6, ligne 7; revendications 1,2 * | 1,2 | G 11 B |
| | ---     -/- | | |

Le présent rapport de recherche a été établi pour toutes les revendications

| Lieu de la recherche | Date d'achèvement de la recherche | | Examinateur |
|---|---|---|---|
| LA HAYE | 30-05-1985 | FUX J. | |

**Office européen des brevets**

**RAPPORT DE RECHERCHE EUROPEENNE**

0153226
Numero de la demande

EP 85 40 0215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | JOURNAL OF THE AUDIO ENGINEERING SOCIETY, vol. 21, no. 3, avril 1973, pages 187-190, New York, US; M.S. MICHAIL et al.: "Recording sound photographically on paper disks" * Page 187, colonne de droite, paragraphe 2; page 188, colonne de gauche, paragraphes 2,3; figure 1 * | 1-3 | |
| A | US-A-3 160 704 (HOLLINGSWORTH) * Colonne 1, lignes 8-29, 57-63; colonne 2, ligne 66 - colonne 3, ligne 2; colonne 4, lignes 26-33; colonne 5, lignes 3-9, 70-74; figure 1 * | 1 | |
| A | US-A-3 839 601 (KIMURA et al.) * Colonne 2, lignes 18-34; colonne 3, ligne 69 - colonne 4, ligne 26; figures 1,2 * | 1 | DOMAINES TECHNIQUES RECHERCHES (Int. Cl.4) |
| A | DE-C- 576 538 (WINCKEL) * Page 1, lignes 22-51 * | 1 | |
| A | US-A-4 353 077 (GOKEY et al.) * Colonne 1, lignes 15-20, 57-61; colonne 2, lignes 50-57; colonne 3, lignes 3-6, 25-27; figures 1,5 * | 1,3 | |

-/-

Le présent rapport de recherche a été établi pour toutes les revendications

| Lieu de la recherche | Date d'achevement de la recherche | Examinateur |
|---|---|---|
| LA HAYE | 30-05-1985 | FUX J. |

Office européen
des brevets

**RAPPORT DE RECHERCHE EUROPEENNE**

0153226
Numero de la demande

EP 85 40 0215

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| A | US-A-3 970 803 (KINZIE, Jr. et al.)<br>* Colonne 1, lignes 31-64; colonne 2, lignes 43-45; colonne 3, lignes 49-53; figures 1,2 * | 1 | |
| | --- | | |
| A | FR-E- 41 990 (CRUDO)<br>* Page 2, lignes 39-66; page 3, lignes 74-92; page 4, lignes 90-101; figure 3 * | 1-3 | |
| | --- | | |
| P,X | EP-A-0 116 936 (NEWS LOG INTERNATIONAL INC.)<br>* Page 6, ligne 2 - page 8, ligne 31; page 14, ligne 17 - page 15, ligne 23; figures 1-6 * | 1 | |
| | ----- | | |
| | | | DOMAINES TECHNIQUES RECHERCHES (Int. Cl.4) |

Le present rapport de recherche a été établi pour toutes les revendications

| Lieu de la recherche | Date d'achèvement de la recherche | | Examinateur |
|---|---|---|---|
| LA HAYE | 30-05-1985 | FUX J. | |